# DEMANDE DE BREVET EUROPEEN

(11) **EP 4 000 968 A1**
(43) Date de publication de la demande: **25.05.2022**
(21) Numéro de dépôt: 21209372.8
(22) Date de dépôt: 19.11.2021
(51) Int. Cl.: B60F 1/02, B60B 19/02

(54) **ORGANE DE ROULEMENT RAIL-ROUTE AMÉLIORÉ**

(30) Priorité: 19.11.2020 FR 2011881
(71) Demandeur: Akka Ingenierie Produit, 92100 Boulogne Billancourt (FR)
(72) Inventeur: JOUSSEAUME, Patrick, 94000 CRETEIL (FR); FOURNIER, Olivier, 78180 MONTIGNY LE BRETONNEUX (FR); THENAULT, Stéphane, 91410 CORBREUSE (FR)
(74) Mandataire: Germain Maureau

(57) **Abrégé**

L'invention concerne un organe de roulement (1) rail-route pour véhicule, comprenant une roue routière (11) montée sur un essieu du véhicule autour d'un premier axe de rotation (A1),
l'organe de roulement (1) comprenant :
une roue ferroviaire (12) de guidage du véhicule sur rails, de révolution autour d'un deuxième axe de rotation (A2),
un dispositif (13) de support et d'entraînement de ladite roue ferroviaire (12), configuré pour entraîner ladite roue ferroviaire (12) entre :
une position passive où la roue ferroviaire (12) est découplée en rotation de la roue routière (11) et où le deuxième axe de rotation (A2) est excentré par rapport au premier axe de rotation (A1) ; et
une position active où la roue ferroviaire (12) est couplée à la roue routière (11) et où le deuxième axe de rotation (A2) est coaxial au premier axe de rotation (A1).

## Description

La présente invention concerne le domaine des véhicules automobiles rail-route pouvant transiter alternativement entre un mode de conduite sur route et un mode de conduite sur rails. Elle concerne plus particulièrement un organe de roulement rail-route, ainsi qu'un essieu de véhicule automobile comprenant un tel organe de roulement.

Il est connu des véhicules prévus pour une conduite alternativement sur route ou sur rails. Pour cela, ces véhicules sont équipés de roues routières et de roues ferroviaires adaptées à cette transition.

La transition d'un mode de conduite sur route vers un mode de conduite sur rails doit permettre d'assurer le couplage des roues ferroviaires avec les rails d'une ligne ferroviaire, alors que la transition d'un mode de conduite sur rails vers un mode de conduite sur route doit permettre d'assurer la mise sur route du véhicule.

Dans l'état de la technique connue, un tel véhicule automobile comprend des roues ferroviaires et des roues routières distinctes les unes des autres de sorte que les roues ferroviaires ou les roues routières sont montées sur des essieux de véhicule de façon articulées pour permettre leur déploiement ou leur rétractation. Il est ainsi possible de configurer le véhicule pour une conduite sur rails ou alternativement sur route.

Ce type de véhicule nécessite toutefois de prévoir des essieux supplémentaires pour supporter les roues ferroviaires. Le châssis du véhicule, ainsi que la motorisation du véhicule se trouvent alors mécaniquement complexes à réaliser.

L'invention a pour objectif de palier au moins l'un des inconvénients cités en proposant entre autres l'amélioration d'un organe de roulement pour un tel véhicule automobile. A cet effet, l'invention a pour objet un organe de roulement rail-route pour véhicule, comprenant une roue routière destinée à être montée en rotation sur un essieu du véhicule autour d'un premier axe de rotation,
l'organe de roulement comprenant en outre :
   une roue ferroviaire de guidage du véhicule sur rails, la roue ferroviaire étant de révolution autour d'un deuxième axe de rotation,
   un dispositif de support et d'entraînement de ladite roue ferroviaire,
ledit dispositif étant configuré pour entraîner ladite roue ferroviaire entre :
   une position passive dans laquelle la roue ferroviaire est découplée en rotation de la roue routière et dans laquelle le deuxième axe de rotation est excentré par rapport au premier axe de rotation ; et
   une position active dans laquelle la roue ferroviaire est couplée en rotation à la roue routière et dans laquelle le deuxième axe de rotation est coaxial par rapport au premier axe de rotation.

La configuration de l'organe de roulement selon l'invention évite l'utilisation d'essieux distincts dédiés aux roues routières et aux roues ferroviaires. L'organe de roulement forme un couple roue routière/roue ferroviaire dont la transition rails/route est facilitée par l'articulation de la roue ferroviaire à l'aide de dispositif de support et d'entraînement pour amener la roue ferroviaire entre une position concentrique avec l'axe de rotation de l'essieu et une position excentrique par rapport à ce même axe de rotation de l'essieu.

On comprendra que la position concentrique correspond à la position active, en l'occurrence à une conduite sur rails, alors que la position excentrique correspond à la position passive, en l'occurrence à une conduite sur route.

Selon un mode de réalisation de l'invention, la roue ferroviaire comprend une couronne intérieure solidaire du dispositif de support et d'entraînement de ladite roue ferroviaire, et une couronne extérieure assurant le couplage de la roue ferroviaire à la roue routière, la couronne intérieure et la couronne extérieure étant découplées en rotation l'une de l'autre par l'intermédiaire d'un mécanisme de roulement.

Une telle roue ferroviaire permet avantageusement la récupération de l'énergie cinétique de la roue routière pour l'entraînement de la roue ferroviaire.

Selon une variante de réalisation de l'invention, dans la position active la couronne extérieure est pressée contre un pneumatique de la roue routière pour assurer le couplage de la roue ferroviaire à la roue routière.

On comprendra par exemple par l'expression « pressé contre » qu'un élément est couplé par friction à un autre élément.

Le couplage en rotation de la couronne extérieure au pneumatique de la roue routière assure avantageusement une grande surface de contact permettant une plus grande transmission de l'énergie cinétique de la roue routière.

Alternativement, dans la position active la couronne extérieure est pressée contre une jante de la roue ferroviaire pour assurer le couplage de la roue ferroviaire à la roue routière.

Un tel couplage de la couronne extérieure permet la récupération de l'énergie cinétique depuis un élément mécanique, en l'occurrence la jante, directement couplé à l'essieu du véhicule.

Selon un mode de réalisation de l'invention, le dispositif de support et d'entraînement de ladite roue ferroviaire comprend un mécanisme de guidage de la roue ferroviaire comportant un support fixe prévu pour être solidaire de l'essieu et sur lequel est monté un arbre tournant autour d'un troisième axe de rotation portant à ses extrémités des bras de guidage de la roue ferroviaire. Les bras de guidage peuvent alors supporter la roue ferroviaire.

Les bras de guidage ont pour effet de supporter et guider la roue ferroviaire entre la position dite passive et la position dite active. Plus particulièrement, l'entraînement en rotation des bras de guidage permet de guider selon une portion circulaire la roue ferroviaire par rapport à la roue routière entre la position passive et la position active. La portion circulaire correspondant approximativement à une rotation de l'arbre tournant d'un angle de 160°.

Selon un mode de réalisation de l'invention, le mécanisme de guidage et d'entraînement comprend en outre un bras de guidage auxiliaire en rotation autour d'un quatrième axe de rotation excentré par rapport au troisième axe de rotation.

Le bras de guidage auxiliaire peut être un autre bras de guidage qui est auxiliaire, le bras de guidage auxiliaire supportant également la roue ferroviaire pour la guider.

Selon un mode de réalisation de l'invention, le mécanisme de guidage comprend un mécanisme de conversion de mouvement prévu pour convertir un mouvement de rotation perpendiculaire au troisième axe de rotation en un mouvement de rotation de l'arbre tournant autour dudit troisième axe.

Un tel mécanisme de conversion de mouvement a pour fait la réduction de son encombrement, celui-ci étant supporté par l'essieu du véhicule.

Selon un mode de réalisation de l'invention, le mécanisme de conversion de mouvement est formé par des engrenages coniques, dont l'engrenage de sortie est couplé en rotation à l'arbre tournant.

Selon un mode de réalisation de l'invention, le mécanisme de conversion de mouvement est entraîné par un moteur électrique.

Le moteur directement couplé à la roue du mécanisme de conversion de mouvement réduit la puissance nécessaire à cet entraînement.

Par ailleurs, l'invention concerne un essieu de véhicule comprenant un organe de roulement tel que défini précédemment.

Selon un mode de réalisation, l'essieu comprend une suspension à laquelle est solidarisé le dispositif de support et d'entraînement de ladite roue ferroviaire.

Selon un mode de réalisation, la roue routière est portée par un moyeu configuré pour être relié à un arbre de transmission du véhicule.

D'autres caractéristiques et avantages de l'invention apparaîtront à la lecture de la description nullement limitative qui suit et des figures annexées qui illustrent de manière schématique plusieurs modes de réalisation de l'invention.
[Fig. 1] représente une vue en perspective d'un organe de roulement monté sur un essieu d'un véhicule, l'organe de roulement comprenant une roue routière et une roue ferroviaire rétractable à l'aide d'un dispositif de support et d'entraînement.
[Fig. 2] représente une vue de côté de l'organe de roulement de la figure 1 dans une position passive adaptée à une conduite sur route.
[Fig. 3] représente une vue de côté de l'organe de roulement de la figure 1 dans une position active adaptée à une conduite sur rails.
[Fig. 4] représente une vue en perspective de l'organe de roulement où l'essieu a été retiré.
[Fig. 5] représente une vue arrière de l'organe de roulement de la figure 4.
[Fig. 6] est une vue en perspective de la roue ferroviaire.
[Fig. 7] est une vue en perspective d'une section de la roue ferroviaire représentée à la figure 6.
[Fig. 8] est une vue en perspective du dispositif de support et d'entraînement tel que monté sur l'essieu et où le dispositif est représenté dans une position dite passive de l'organe de roulement.
[Fig. 9] est une vue en perspective du dispositif de support et d'entraînement seul représenté dans une position dite active de l'organe de roulement.

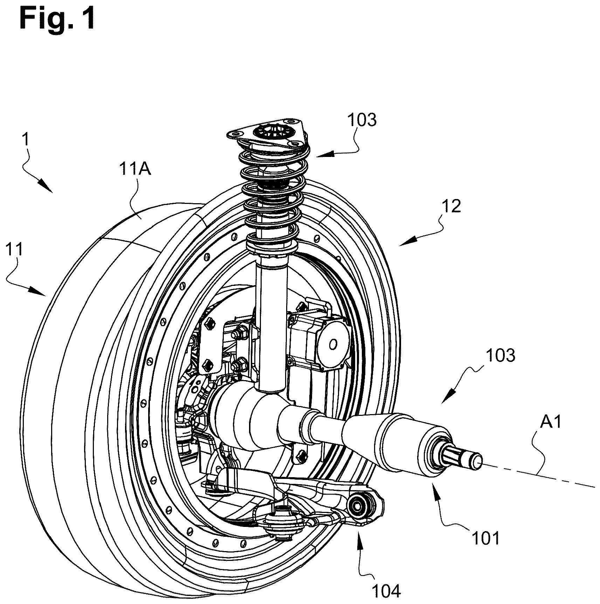

En se référant à la figure 1, on a représenté un organe de roulement 1 rail-route pour véhicule automobile monté sur un essieu d'un véhicule.

L'essieu est représenté ici comprend un arbre de transmission 101, un moyeu 102 recevant l'arbre de transmission 101, une suspension 103 fixée au moyeu 102 et une chape de fixation 104 prévue pour relier le moyeu 102 à un châssis du véhicule.

Dans la suite de la description on décrira un seul organe de roulement 1. Bien entendu, le véhicule est équipé de plusieurs organes de roulement 1. Ainsi, on comprendra que la description de plusieurs roues routière 11 ou plusieurs roues ferroviaires 12 fait référence à un véhicule équipé de plusieurs organes de roulement 1.

L'organe de roulement 1 rail-route comprend une roue routière 11 et une roue ferroviaire 12 assemblées l'une à l'autre de façon mobile.

La roue routière 11 permet une conduite du véhicule sur route, alors que la roue ferroviaire 12 permet une conduite sur rails.

La roue routière 11 est montée en rotation sur le moyeu 102 de l'essieu autour d'un premier axe de rotation A1.

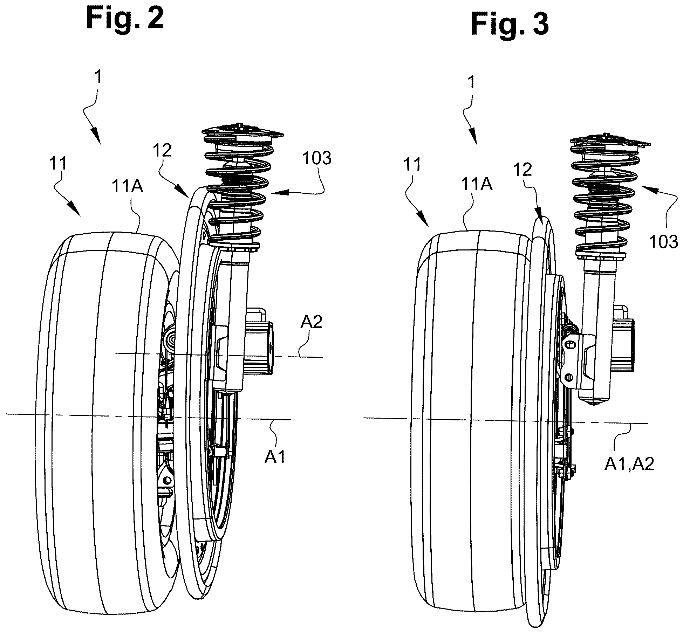

En se référant à la figure 2, il est représenté l'organe de roulement 1 rail-route dans une position passive où la roue ferroviaire 12 est découplée en rotation de la roue routière 11. Dans cette position passive de la roue ferroviaire 12, l'organe de roulement 1 est adapté à une conduite sur route.

En se référant à la figure 3, il est représenté l'organe de roulement 1 rail-route dans une position active où la roue ferroviaire 12 est couplée en rotation avec la roue routière 11. Dans cette position active de la roue ferroviaire 12, l'organe de roulement 1 est adapté à une conduite sur rails dans laquelle la roue ferroviaire 12 permet de guider le véhicule sur les rails.

On comprendra particulièrement que dans la position passive et active de l'organe de roulement 1, l'assise du véhicule au sol est toujours réalisée par la roue routière 11. En d'autres termes, en conduite sur route ou bien en conduite sur rails, le véhicule est toujours guidé en traction au sol par la roue routière 11. Dans la position active, la roue ferroviaire 12 assure uniquement le guidage du véhicule sur les rails.

En se référant aux figures 1 à 3 ensemble, on notera que la roue ferroviaire 12 présente une révolution autour d'un axe de rotation, dit deuxième axe de rotation A2.

De façon notable, l'organe de roulement 1 est équipé d'un dispositif 13 de support et d'entraînement de ladite roue ferroviaire 12.

Ce dispositif 13 permet l'entrainement de ladite roue ferroviaire 12 entre la position passive illustrée aux figures 1 et 2, et la position active illustrée à la figure 3.

Plus particulièrement, dans la position passive la roue ferroviaire 12 est découplée en rotation de la roue routière 11 et le deuxième axe de rotation A2 est excentré par rapport au premier axe de rotation A1, alors que dans la position active la roue ferroviaire 12 est couplée en rotation à la roue routière 11 et le deuxième axe de rotation A2 est coaxial par rapport au premier axe de rotation A1.

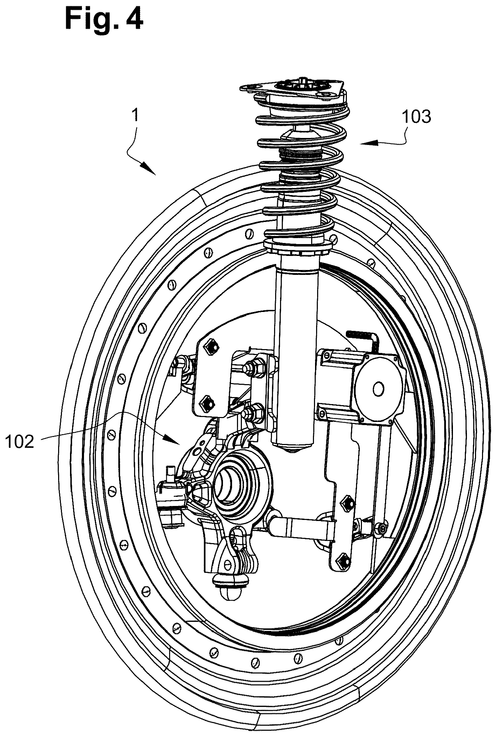

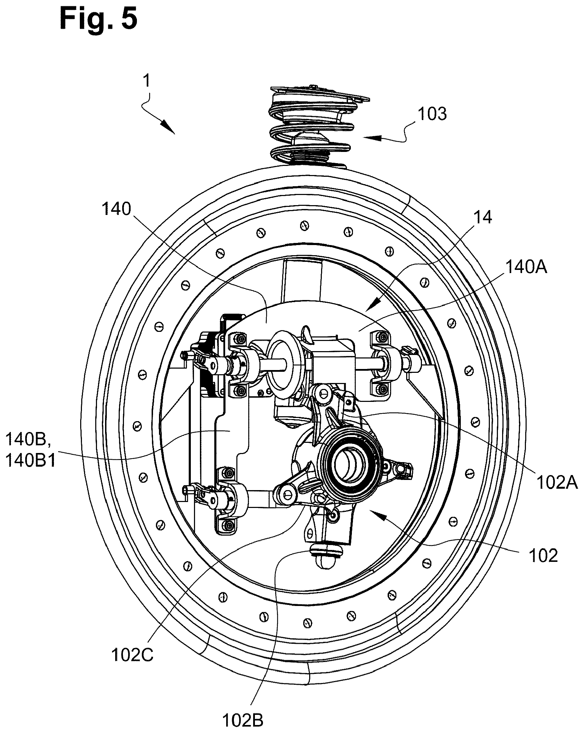

En se référant aux figures 4 et 5, on a représenté l'organe de roulement 1 rail-route de la figure 1 dépourvu de la chape de fixation 104, de l'arbre de transmission 101 et de la roue routière 11, ceci afin de mieux représenter le dispositif 13 de support et d'entraînement de ladite roue ferroviaire 12.

Le moyeu 102 du véhicule est solidarisé de façon fixe à la suspension 103 de l'essieu par l'intermédiaire d'une première patte de fixation 102A. Une deuxième patte de fixation 102B du moyeu 102 permet de le solidariser à la chape de fixation 104.

Le dispositif 13 de support et d'entraînement de ladite roue ferroviaire 12 comprend un mécanisme de guidage 14 de la roue ferroviaire 12 entre ses positions active et passive, où le mécanisme de guidage 14 est commandé par un moteur électrique 15.

Le mécanisme de guidage 14 comprend, par ailleurs, un support 140, ici une plaque de support 140 formant une anse, prévue pour être solidaire de façon fixe au moyeu 102 et comprenant deux branches 140A, 140B, dont une branche 140B se prolonge par une extension 140B1 pour être reliée à une patte de fixation latérale 102C, dite troisième patte 102C, du moyeu 102.

En outre, le mécanisme de guidage 14 comprend un arbre tournant 141 fixé libre en rotation sur le support 140 autour d'un troisième axe de rotation A3. La fixation de l'arbre tournant 141 au support 140 est réalisée par l'intermédiaire de paliers 141A, ici deux paliers 141A, guidant l'arbre tournant 141 en rotation autour du troisième axe de rotation A3.

Le troisième axe de rotation A3 est perpendiculaire au premier et deuxième axes de rotation A1, A2.

L'arbre tournant 141 comprend à ses extrémités des bras de guidage 16 de la roue ferroviaire 12, en l'occurrence deux bras de guidage 16.

Ces bras de guidage 16 sont fixes par rapport à l'arbre tournant 141 et solidaires des équerres de fixation 12A de la roue ferroviaire 12.

Ladite extension 140B1 de la branche du support 140 comprend un autre palier 141A sur lequel est monté libre en rotation, autour d'un quatrième axe de rotation A4, un bras de guidage 16 auxiliaire. L'extrémité libre de ce bras de guidage 16 auxiliaire est solidaire, à la fois d'une équerre de fixation 12A de la roue ferroviaire 12, et d'une tige de raccordement 17 fixée à l'extrémité d'un des autres bras de guidage 16 relié à l'arbre tournant 141.

Le quatrième axe de rotation A4 est parallèle au troisième axe de rotation A3.

L'entraînement en rotation des bras de guidage 16 reliés à l'arbre tournant 141 entraîne la rotation du bras de guidage 16 auxiliaire par l'intermédiaire de la tige de raccordement 17.

Les équerres de fixation 12A et les bras de guidage 16 forment des points d'attache de la roue ferroviaire 12 au mécanisme de guidage 14. L'utilisation de trois points d'attache permet un maintien stable de la roue ferroviaire 12, ainsi que le maintien de son parallélisme par rapport à la roue routière 11.

Les bras de guidage 16 forment un levier par rapport à l'arbre tournant 141 permettant d'amener la roue ferroviaire 12 alternativement à la position passive ou à la position active.

L'arbre tournant 141 est entraîné à l'aide d'un mécanisme de conversion de mouvement 18 prévu pour convertir un mouvement de rotation perpendiculaire au troisième axe de rotation A3 en un mouvement de rotation de l'arbre tournant 141 autour dudit troisième axe A3.

A cet effet, il est prévu des engrenages coniques 18A, 18B, dit aussi concourants, dont l'engrenage conique de sortie 18B est couplé en rotation de l'arbre tournant 141.

L'engrenage conique d'entrée 18a est couplé en rotation par son arbre d'entrée 18A1 à un moteur électrique 15.

Bien entendu, le moteur électrique 15est fixe par rapport au support 14

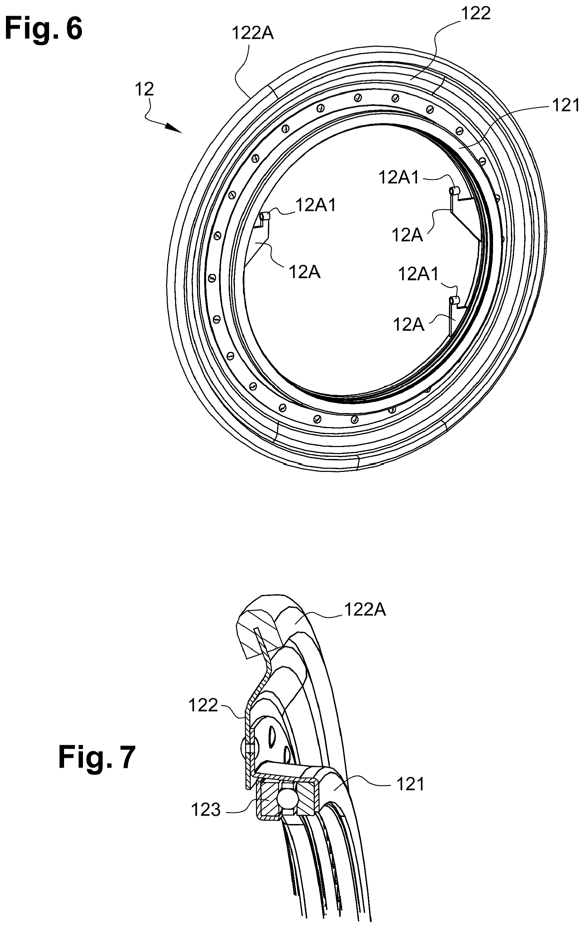

En se référant aux figures 6 et 7, on va maintenant décrire plus particulièrement la roue ferroviaire 12

Tel que représenté, la roue ferroviaire 12 comprend une couronne intérieure 121 et une couronne extérieure 122.

La couronne intérieure 121 est solidaire du dispositif 13 de support et d'entraînement de ladite roue ferroviaire 12. Plus particulièrement, la couronne intérieure 121 est reliée audit dispositif 13 par l'intermédiaire des équerres de fixation 12A solidaire de la couronne intérieure 121 et comportant à leur extrémité des bagues 12A1 sur lesquelles sont montées libre en rotation des pions 16A des bras de guidage 16 disposés à leur extrémité.

La couronne extérieure 122 assure le couplage de la roue ferroviaire 12 à la roue routière 11. Par ailleurs, la couronne extérieure 122 est équipée d'un boudin 122A sur son pourtour adapté à la circulation sur rails.

On notera particulièrement que la roue ferroviaire 12 présente un diamètre extérieur supérieur au diamètre extérieur de la roue routière 11. En l'occurrence, dans la position active de l'organe de roulement 1, c'est-à-dire lorsque la roue routière 11 et la roue ferroviaire 12 sont coaxiales, la couronne extérieure 122 de la roue ferroviaire 12 s'étend radialement au-delà de la roue routière 11.

Il convient de noter qu'un mécanisme de roulement 123, ici un ensemble de billes, intercalé entre la couronne intérieure 121 et la couronne extérieure 122 permet un découplage en rotation des couronnes intérieure et extérieure 121, 122 l'une par rapport à l'autre.

On va maintenant décrire plus particulièrement le fonctionnement de l'organe de roulement 1.

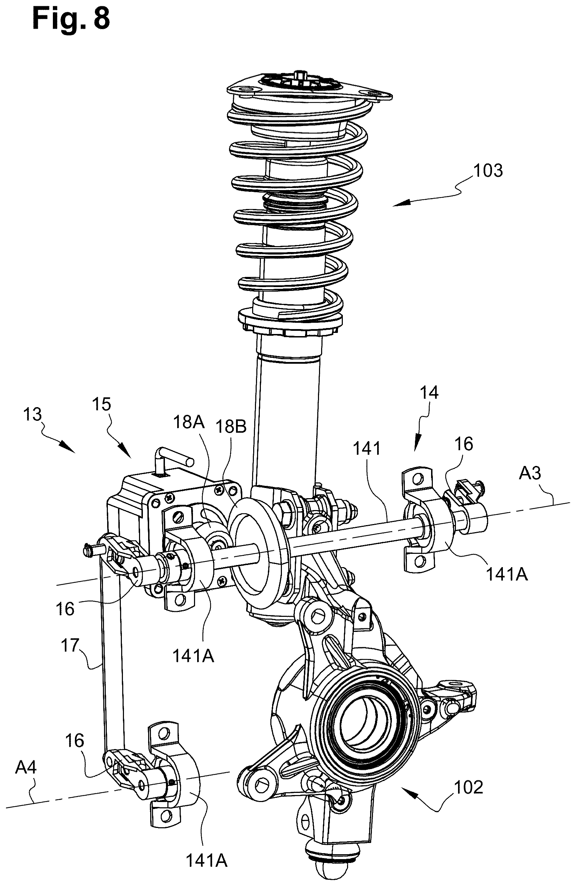

Dans un mode de conduite sur route, l'organe de roulement 1 se trouve dans une configuration illustrée à la figure 2, où la roue ferroviaire 12 est découplée en rotation de la roue routière 11. Dans cette configuration, la position de l'arbre tournant 141 est celle de la figure 8, où les bras de guidage 16 formant levier éloignent la roue ferroviaire 12 de la roue routière 11.

La roue ferroviaire 12 est alors relevée par rapport à la roue routière 11, et le véhicule peut avancer sur la route.

Dans un mode de conduite sur rails, le véhicule est bien entendu préalablement positionné en correspondance des rails pour permettre l'engagement du véhicule sur ces dernières, une plateforme peut être prévu à cet effet pour surélever le véhicule permettant ainsi le déploiement des roues ferroviaires 12 dans la position active.

Une fois le véhicule positionné au-dessus des rails, le moteur électrique 15 est activé entraînant alors la rotation de l'arbre d'entrée 18A1 du mécanisme de conversion de mouvement 18. L'engrenage d'entrée 18A dont la denture est engagée avec la denture de l'engrange de sortie 18B entraîne par conséquent l'engrange de sortie 18B en rotation.

La rotation du l'engrenage de sortie 18B met en rotation l'arbre tournant 141. L'arbre tournant 141 entraîne alors le déplacement en rotation des deux bras de guidage 16 solidaires de l'arbre tournant 141, ainsi que le déplacement en rotation du troisième bras de guidage 16 actionné par les deux bras de guidage 16 liés à l'arbre tournant 141 par l'intermédiaire de la tige de raccordement 17.

On comprendra que le mouvement de ces bras de guidage 16 est synchronisé par rapport à la rotation de l'arbre tournant 141.

Les bras de guidage 16 entraînent alors le déplacement de la roue ferroviaire 12 de sa position passive vers sa position active correspondant à une rotation de l'arbre tournant 141 d'un angle égal à 160°.

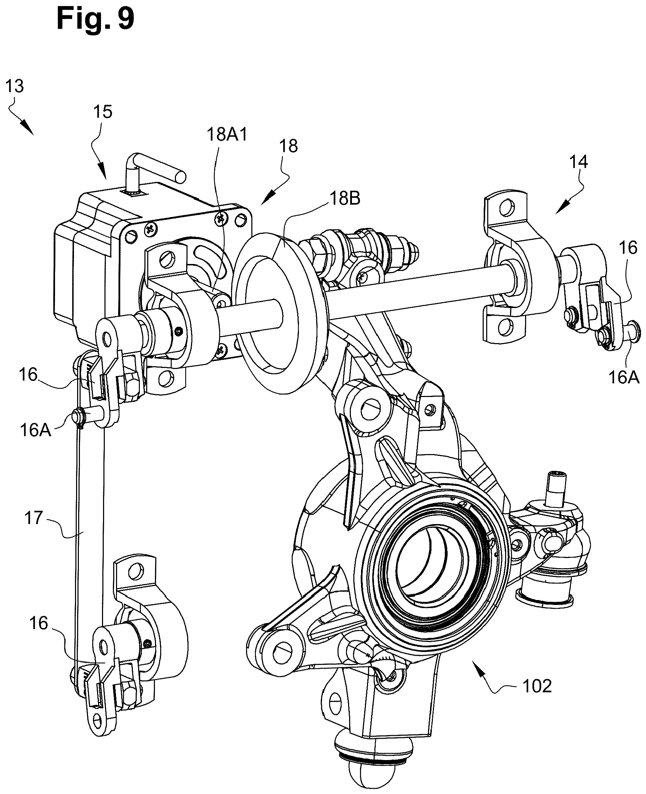

L'orientation des bras de guidage 16 dans la position active correspond à la configuration illustrée à la figure 9, et où la couronne extérieure 122 de la roue ferroviaire 12 est pressée contre un pneumatique 11A de la roue routière 11 pour assurer le couplage de la roue ferroviaire 12 à la roue routière 11.

Les bras de guidage 16 maintiennent alors pressés la couronne extérieure 122 contre le pneumatique 11A pour assurer ce couplage en rotation en continu.

On comprendra que le couple généré sur l'arbre tournant 141 nécessaire à ce couplage en rotation est fourni par le moteur électrique 15.

Dans la position active de l'organe de roulement 1, le boudin 122A de la roue ferroviaire 12 de l'organe de roulement 1 est alors engagé sur les rails, alors que la roue routière 11 est assise sur la chaussée comprenant les rails. Ainsi, l'assise du véhicule est assurée par les roues routières 11 uniquement, les roues ferroviaires 12 engagées sur les rails ayant pour fonction de guider le véhicule sur celles-ci.

Les roues routières 11 du véhicule entraînent alors le véhicule pour son avancée sur la chaussée comprenant les rails.

La couronne extérieure 122 de la roue ferroviaire 12 est alors entraînée en rotation par l'énergie cinétique de la roue routière 11.

Les billes du mécanisme de roulement 123 permettent le découplage en rotation de la couronne extérieure 122 par rapport à la couronne intérieure 121 de sorte que seule la couronne extérieure 122 est entraînée en rotation par la roue routière 11.

La couronne extérieure 122 guide alors le véhicule sur les rails.

Lorsqu'il est nécessaire de transiter le véhicule vers un mode de conduite sur route, le moteur électrique 15 est entraîné en rotation en sens inverse pour désengager les roues ferroviaires 12 des rails et les amener dans la position passive illustrée à la figure 2.

A cet effet, la plateforme prévue pour engager le véhicule sur les rails permet également de surélever le véhicule et alors assurer le désengagement amenant les roues ferroviaires 12 dans la position passive.

Bien évidemment, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. En particulier, toutes les variantes et modes de réalisation décrits précédemment sont combinables entre eux.

## Revendications

1. Organe de roulement (1) rail-route pour véhicule, comprenant une roue routière (11) destinée à être montée en rotation sur un essieu du véhicule autour d'un premier axe de rotation (A1),
l'organe de roulement (1) comprenant en outre :
une roue ferroviaire (12) de guidage du véhicule sur rails, la roue ferroviaire (12) étant de révolution autour d'un deuxième axe de rotation (A2),
un dispositif (13) de support et d'entraînement de ladite roue ferroviaire (12),
ledit dispositif (13) étant configuré pour entraîner ladite roue ferroviaire (12) entre :
une position passive dans laquelle la roue ferroviaire (12) est découplée en rotation de la roue routière (11) et dans laquelle le deuxième axe de rotation (A2) est excentré par rapport au premier axe de rotation (A1) ; et
une position active dans laquelle la roue ferroviaire (12) est couplée en rotation à la roue routière (11) et dans laquelle le deuxième axe de rotation (A2) est coaxial par rapport au premier axe de rotation (A1).

2. Organe de roulement (1) rail-route selon la revendication précédente, **caractérisé en ce que** la roue ferroviaire (12) comprend une couronne intérieure (121) solidaire du dispositif (13) de support et d'entraînement de ladite roue ferroviaire (12), et une couronne extérieure (122) assurant le couplage de la roue ferroviaire (12) à la roue routière (11), la couronne intérieure (121) et la couronne extérieure (122) étant découplées en rotation l'une de l'autre par l'intermédiaire d'un mécanisme de roulement (123).

3. Organe de roulement (1) rail-route selon la revendication précédente, **caractérisé en ce que**, dans la position active, la couronne extérieure (122) est pressée contre un pneumatique (11A) de la roue routière (11) pour assurer le couplage de la roue ferroviaire (12) à la roue routière (11).

4. Organe de roulement (1) rail-route selon l'une quelconque des revendications précédentes, **caractérisé en ce que** le dispositif (13) de support et d'entraînement de ladite roue ferroviaire (12) comprend un mécanisme de guidage (14) de la roue ferroviaire (12) comportant un support (140) fixe prévu pour être solidaire de l'essieu et sur lequel est monté un arbre tournant (141) autour d'un troisième axe de rotation (A3) portant à ses extrémités des bras de guidage (16) de la roue ferroviaire (12), les bras de guidage (16) supportant la roue ferroviaire (12).

5. Organe de roulement (1) rail-route selon la revendication précédente, **caractérisé en ce que** le mécanisme de guidage (14) et d'entraînement comprend en outre un bras de guidage (16) auxiliaire en rotation autour d'un quatrième axe de rotation (A4) excentré par rapport au troisième axe de rotation (A3), le bras de guidage (16) auxiliaire supportant la roue ferroviaire (12) pour la guider.

6. Organe de roulement (1) rail-route selon l'une quelconque des revendications 4 ou 5, **caractérisé en ce que** le mécanisme de guidage (14) comprend un mécanisme de conversion de mouvement (18) prévu pour convertir un mouvement de rotation perpendiculaire au troisième axe de rotation (A3) en un mouvement de rotation de l'arbre tournant (141) autour dudit troisième axe (A3).

7. Organe de roulement (1) rail-route selon la revendication précédente, **caractérisé en ce que** le mécanisme de conversion de mouvement (18) est formé par des engrenages coniques (17A, 18B), dont l'engrenage de sortie (18B) est couplé en rotation à l'arbre tournant (141).

8. Organe de roulement (1) rail-route selon l'une quelconque des revendications 6 ou 7, **caractérisé en ce que** le mécanisme de conversion de mouvement (18) est entraîné par un moteur électrique (15).

9. Essieu de véhicule comprenant un organe de roulement (1) selon l'une quelconque des revendications précédentes.

10. Essieu de véhicule selon la revendication précédente, **caractérisé en ce qu'**il comprend une suspension (103) à laquelle est solidarisé le dispositif (13) de support et d'entraînement de ladite roue ferroviaire (12).
